Europäisches Patentamt

European Patent Office

Office européen des brevets

(19)

(11) Veröffentlichungsnummer: **0 192 264**
**A2**

(12) # EUROPÄISCHE PATENTANMELDUNG

(21) Anmeldenummer: 86102220.0

(22) Anmeldetag: 20.02.86

(51) Int. Cl.⁴: **C 08 L 77/00**
C 08 J 3/22, C 08 K 7/00

(30) Priorität: 22.02.85 CH 818/85

(43) Veröffentlichungstag der Anmeldung:
27.08.86 Patentblatt 86/35

(84) Benannte Vertragsstaaten:
DE FR GB IT NL

(71) Anmelder: Ems-Inventa AG
Selnaustrasse 16
CH-8039 Zürich(CH)

(72) Erfinder: Kerschbaumer, Franz, Dr.
Ringstrasse 54
CH-7000 Chur(CH)

(72) Erfinder: Schmidt, Klaus
Aspermontstrasse 24
CH-7000 Chur(CH)

(74) Vertreter: Schön, Alfred, Dr. et al,
Patentanwälte Müller-Boré, Deufel, Schön, Hertel
Lewald, Otto Isartorplatz 6 Postfach 26 02 47
D-8000 München 26(DE)

(54) **Thermoplastische glasfaserverstärkte Polyamidformmassen.**

(57) Thermoplastische Polyamidformmassen, die schlagzäh-machende Zusätze enthalten, mit Glasfasern verstärkt sind und mit Farbstoffen und Pigmenten eingefärbt werden können, bestehen aus einem Gemisch von Komponenten A und B.

Die Komponente A besteht aus glasfaserhaltigem Polyamid, die Komponente B aus mit schlagzähmachenden Zusätzen versehenem Polyamid und kann ausserdem noch Farbstoffe, Pigmente, Hitze- und Lichtstabilisatoren sowie Verarbeitungshilfsmittel enthalten.

Durch die getrennte Zugabe von Glasfasern zum Polyamid einerseits und schlagzähmachenden Zusätzen, Pigmenten etc. andererseits wird überraschenderweise die bei der Zugabe aller Beimengungen zum Polyamid in einem Arbeitsgang in die gleiche Charge festgestellte Verminderung der mechanischen Eigenschaften wie Schlagzähigkeit und Kerbschlagzähigkeit verhindert.

EP 0 192 264 A2

Die vorliegende Erfindung bezieht sich auf thermoplastische glasfaserverstärkte Formmassen auf der Basis von Polyamiden (PA) mit verbesserter Schlagzähigkeit und Kerbschlagzähigkeit.

Polyamide haben für technische Anwendungen einen breiten Einsatz gefunden. Für zahlreiche Anwendungen ist die Steifheit der PA ungenügend und sie werden deshalb häufig mit Glasfasern verstärkt. Solche glasfaserverstärkte Polyamide findet man häufig in Gehäuseoberteilen von Elektrohandwerkzeugen wie z.B. Schlaglochbohrern. Der Nachteil solcher glasfaserverstärkter Polyamide liegt darin, dass sie im Vergleich zu unverstärkten PA-Typen eine verminderte Schlagzähigkeit besitzen. Wegen der ungenügenden Schlagzähigkeit erfüllen deshalb oft die glasfaserverstärkten PA nicht die UL-Falltestnormen von Elektrowerkzeugen. Es wird deshalb versucht, die Schlagzähigkeit von glasfaserverstärkten Polyamiden zu verbessern. Gemäss dem Stand der Technik wird glasfaserverstärktes PA durch die Zugabe von Schlagzähmodifikator etwas verbessert. Gemäss üblichem Verfahren (EP 0'021'303 und EP 0'027'198) werden Glasfasern und Schlagzähmodifikator und gegebenenfalls Farbstoffe im gleichen Extrusionsgang in das PA einextrudiert. Dabei können auch der Schlagzähmodifikator, Farbstoffe oder Pigmente in einem ersten Extrusionsgang in das PA einextrudiert werden und anschliessend werden in dieses schlagzähmodifizierte PA in einem zweiten Extrusionsgang die Glasfasern eingearbeitet.

Werden ausserdem Farbstoffe oder Pigmente, z.B. $TiO_2$, die auf die Glasfaser schädigend wirken (siehe DOS 2'226'932), nach obengenanntem Verfahren in das PA einextrudiert, so wird die Schlagzähigkeit zusätzlich drastisch herabgesetzt.

Bisher war es also nicht möglich, hochschlagzähe, glasfaserverstärkte Polyamide mit kritischen Farbstoffen oder Pigmenten einzufärben.

Es wurde nun überraschenderweise gefunden, dass einerseits die Schlagzähigkeit und die Kerbschlagzähigkeit von glasfaserhaltigen Polyamidformmassen wesentlich verbessert werden kann und andererseits die negativen Effekte von vielen Farbstoffen und Pigmenten überwunden werden können, wenn die Formmassen aus einer Mischung aus einem glasfaserhaltigen PA als Komponente A und einem schlagzähmachende Zusätze enthaltenden Polyamid als Komponente B bestehen. Die Glasfasern und die schlagzähmachenden Zusätze werden also dem PA nicht in einem einzigen Arbeitsgang sondern getrennt zugegeben.

Die verwendeten thermoplastischen Polyamide sind bevorzugt gesättigte, lineare Polyamide. Geeignet sind z.B. Polycaprolactam (PA 6), Polyhexamethylenadipinsäureamid (PA 6/6), Polyhexamethylensebacinsäureamid, Polyhexamethylenazelainsäureamid, Polylaurinlactam, Polyundecanamid, ferner Homo- und Copolyamide, die unter Verwendung von Adipinsäure, Azelainsäure, Sebacinsäure, Dodecandisäure, Tridecandisäure, Terephthalsäure einerseits und Hexamethylendiamin, Tetramethylendiamin, Trimethylhexamethylendiamin, Bis-(4-amino-cyclohexyl)-methan, 2,2-Bis-(4'-amino-cyclohexyl)-propan andererseits hergestellt werden, sowie Copolyamide, die durch Polykondensation von Lactamen zusammen mit den obengenannten Dicarbonsäuren und Diaminen erhalten werden.

Als Glasfasern kommen alle üblichen Glasfasern in Betracht, die für die allgemein übliche Verstärkung von Polyamidformmassen angeboten und verwendet werden. Die in der Formmasse vorliegenden Glasfasern haben im allgemeinen eine Länge von 0.05-1.0 mm, vorzugsweise 0.1-0.5 mm und einen Durchmesser von 5-20 μm, vorzugsweise 6-14 μm.

Als schlagzähmachende Zusätze können sämtliche schlagzähmachenden Handelsprodukte eingesetzt werden. Vorzugsweise werden Maleinsäureanhydrid-gepfropfte Ethylenpropylencopolymere und Ethylenbutylencopolymere oder Styrol-Butadien-Acrylsäureester-Copolymere eingesetzt.

Beispiele
━━━━━━━━━

1. Vergleichsbeispiel 1-8

(Herstellung nach konventioneller Art). Einextrusion des Schlagzähmodifikators und von Farbstoffen im gleichen Extrusionsgang zusammen mit den Glasfasern.

Auf einem Zweiwellenextruder vom Typ ZSK 30 der Firma Werner und Pfleiderer, Stuttgart, wurden PA 6 mit einer relativen Viskosität von 2.8 oder PA 6/6 mit einer relativen Viskosität von 2.7, gemessen als 1 Gew.%ige Lösungen in 96%iger Schwefelsäure, zusammen mit einem mit Maleinsäureanhydrid gepfropften Ethylenpropylencopolymeren (Beispiele 1, 2, 3, 4, 7, 8) oder mit einem Styrol-Butadien-Acrylsäureester-Copolymeren (Beispiele 5, 6) und mit Farbstoffen oder Pigmenten gemäss der in der Tabelle 1 genannten Zusammensetzung bei 220-280°C aufgeschmolzen. In die Schmelze wurden die Glasfasern in Form von Rovings mit der in der Tabelle 1 angegebenen Konzentration zugegeben. Die so extrudierten Stränge wurden in einem Wasserbad abgekühlt, granuliert und getrocknet. Das Granulat wurde auf einer Spritzgussmaschine zu Klein-DIN-Balken gemäss DIN 53'453 verarbeitet. Diese Prüfkörper wurden trocken im spritzfrischen Zustand geprüft. Zur Beurteilung der mechanischen Eigenschaften wurde die Schlag- und Kerbschlagzähigkeit bei 23°C gemäss DIN 53'453 geprüft. Die Resultate sind in der Tabelle 1 zusammengefasst.

Tabelle 1:

| Bei-spiel | Gewichtsprozent | | | | | | Schlag-zähig-keit (kJ/m²) | Kerbschlag-zähigkeit (kJ/m²) |
|---|---|---|---|---|---|---|---|---|
| | Schlag-zähmodi-fikator | PA 6 | PA 6/6 | Glas-faser | Licht-blau 100 | Fibaplast grün, PA 261481 (ent-hält $TiO_2$) | | |
| 1 | 7 | 63.0 | - | 30 | - | - | 46.3 | 18 |
| 2 | 10.5 | 59.5 | - | 30 | - | - | 43.0 | 20.2 |
| 3 | 7 | 62.5 | - | 30 | 0.5 | - | 32.2 | 11.3 |
| 4 | 10.5 | 59.0 | - | 30 | 0.5 | - | 30.8 | 13.0 |
| 5 | 7 | 62.0 | - | 30 | - | 1 | 32.0 | 10.6 |
| 6 | 10.5 | 58.0 | - | 30 | - | 1 | 28.7 | 12.8 |
| 7 | 7 | - | 68 | 25 | - | 1 | 44.3 | 14.8 |
| 8 | 10.5 | - | 64.5 | 25 | - | - | 39.6 | 13.9 |

## 2. Beispiele gemäss Erfindung

### a) Herstellung der Komponente A:

Auf einem Zweiwellenextruder vom Typ ZSK 30 der Firma Werner und Pfleiderer wurden PA 6 mit einer relativen Viskosität von 2.8 oder PA 6/6 mit einer relativen Viskosität von 2.7, gemessen als 1 Gew.%ige Lösungen in 96%iger Schwefelsäure, bei 220-280°C aufgeschmolzen. In die Schmelze wurden die Glasfasern in Form von Rovings mit der in der Tabelle 2 angegebenen Konzentration zugegeben. Die so extrudierten Stränge wurden in einem Wasserbad abgekühlt, granuliert und getrocknet.

Tabelle 2:

|  | Gewichtsprozent | | |
|---|---|---|---|
| Komponente A | Polyamid 6 | Polyamid 6/6 | Glasfaser |
| I | 60 | - | 40 |
| II | - | 65 | 35 |

### b) Herstellung der Komponente B:

Auf einem Zweiwellenextruder vom Typ ZSK 30 der Firma Werner und Pfleiderer wurden PA 6 mit einer relativen Viskosität von 2.8 oder PA 6/6 mit einer relativen Viskosität von 2.7, gemessen als 1 Gew.%ige Lösungen in 96%iger Schwefelsäure, zusammen mit einem mit Maleinsäureanhydrid gepfropften Ethylenpropylencopolymeren (Beispiele III, V, VI) oder mit einem Styrol-

Butadien-Acrylsäureester-Copolymeren (Beispiel IV)
und mit dem Farbstoffen oder Pigmenten gemäss den in
der Tabelle 3 genannten Zusammensetzungen bei 220-
280°C aufgeschmolzen. Die so extrudierten Stränge wurden in einem Wasserbad abgekühlt, granuliert und getrocknet.

Tabelle 3:

| Komponente B | Gewichtsprozent | | | | |
|---|---|---|---|---|---|
| | PA 6 | PA 6/6 | Schlag-zähmodi-fikator | Licht-blau 100 | Fibaplast grün, PA 261481 (enthält $TiO_2$) |
| III | 72 | - | 28 | - | - |
| IV | 68 | - | 28 | - | 4 |
| V | 70 | - | 28 | 2 | - |
| VI | - | 77.5 | 24.5 | - | - |

c) Die in den Tabellen 2 und 3 aufgeführten Komponenten
   A und B wurden gemäss dem in der Tabelle 4 angegebenen Gewichtsverhältnis abgemischt und so direkt auf
   einer Spritzgussmaschine zu Klein-DIN-Balken gemäss
   DIN 53'453 verarbeitet. Diese Prüfkörper wurden trocken im spritzfrischen Zustand geprüft. Zur Beurteilung der mechanischen Eigenschaften wurde die Schlag-
   und Kerbschlagzähigkeit bei 23°C gemäss DIN 53'453
   geprüft. Die Resultate sind in der Tabelle 4 zusammengefasst.

| Bei-spiel | Granulatmischung | Zusammensetzung der Prüfkörper in Gewichts-prozent | | | | | | Schlag-zähig-keit | Kerb-schlag-zähig-keit |
|---|---|---|---|---|---|---|---|---|---|
| | | Schlag-zähmo-difika-tor | PA 6 | PA 6/6 | Glas-faser | Licht-blau 100 | Fibaplast grün, PA 261481 (enthält $TiO_2$) | $(kJ/m^2)$ | $(kJ/m^2)$ |
| 9 | Komponente A I 75%<br>Komponente B III 25% | 7 | 63 | - | 30 | - | - | 64.4 | 24.0 |
| 10 | Komponente A I 75%<br>Komponente B IV 25% | 7 | 62 | - | 30 | - | 1 | 58.4 | 23.0 |
| 11 | Komponente A I 75%<br>Komponente B V 25% | 7 | 62.5 | - | 30 | 0.5 | - | 55.0 | 22.6 |
| 12 | Komponente A II 71.5%<br>Komponente B VI 28.5% | 7 | - | 68 | 25 | - | - | 58.8 | 17.4 |

Der Vergleich der gemessenen mechanischen Eigenschaften zeigt die Vorteile des erfindungsgemässen Produktes.

Die Prüfkörper aus dem Beispiel 1 wurden gemäss dem üblichen Verfahren hergestellt und zeigen eine mässige Schlag- und Kerbschlagzähigkeit, während die Prüfkörper aus dem Beispiel 9, die erfindungsgemäss zusammensetzt sind, eine gute Schlag- und Kerbschlagzähigkeit zeigen. Die Zusammensetzung der Produkte aus dem Beispiel 1 und dem Beispiel 9 ist dieselbe.

Die eingefärbten Prüfkörper aus dem Beispiel 5 wurden gemäss dem üblichen Verfahren hergestellt und zeigen eine schlechte Schlag- und Kerbschlagzähigkeit, während die Prüfkörper aus dem Beispiel 10, die erfindungsgemäss zusammengesetzt sind, eine gute Schlag- und Kerbschlagzähigkeit zeigen. Die Zusammensetzung der Produkte aus dem Beispiel 5 und Beispiel 10 ist dieselbe.

Patentansprüche

1. Thermoplastische schlagzähe und kerbschlagzähe glasfaserverstärkte Polyamidformmassen, bestehnd aus einer Mischung aus einem glasfaserhaltigen Polyamid als Komponente A und aus einem schlagzähmachenden Zusatz enthaltenden Polyamid als Komponente B.

2. Formmassen gemäss Patentanspruch 1, dadurch gekennzeichnet, dass beide Komponenten A und B thermoplastisch verarbeitbare Polyamide (PA) aus der Gruppe PA 6, PA 6/6, PA 12, PA 11, PA 6/9, PA 6/10, PA 6/12 oder Mischungen derselben enthalten.

3. Formmassen gemäss Patentanspruch 1, dadurch gekennzeichnet, dass beide Komponenten A und B Homo- und Copolyamide, die unter Verwendung von Adipinsäure, Azelainsäure, Sebacinsäure, Dodecandisäure, Tridecandisäure, Terephthalsäure einerseits und Hexamethylendiamin, Tetramethylendiamin, Trimethylhexamethylendiamin, Bis-(4-amino-cyclohexyl)-methan, 2,2-Bis-(4'-amino-cyclohexyl)-propan andererseits hergestellt werden, sowie Copolyamide, die durch Polykondensation von Lactamen zusammen mit den obengenannten Dicarbonsäuren und Diaminen erhalten werden, enthalten.

4. Formmassen gemäss Patentanspruch 1, 2 und 3, dadurch gekennzeichnet, dass die Komponente A aus 90-40 Gew.% Polyamid und 10-60 Gew.% Glasfasern besteht und gegebenenfalls Hitze- und Lichtstabilisatoren enthält.

5. Formmassen gemäss Patentanspruch 1, 2 und 3, dadurch gekennzeichnet, dass die Komponente B aus 30-95 Gew.% Polyamid und 5-70 Gew.% eines schlagzähmachenden Zusatzes besteht und gegebenenfalls Hitze- und Lichtstabilisatoren, Verarbeitungshilfsmittel, Farbstoffe und Pigmente enthält.

6. Formmassen gemäss Patentanspruch 1, dadurch gekennzeichnet, dass die Komponenten A und B in einem Mischungsverhältnis von 95:5 bis 15:85 Gew.Teilen, vorzugsweise 80-20 bis 20-80 Gew.Teilen, eingesetzt werden.